Europäisches Patentamt

European Patent Office

Office européen des brevets

(19)

(11) Numéro de publication : **0 198 731**
**B1**

(12) **FASCICULE DE BREVET EUROPÉEN**

(45) Date de publication du fascicule du brevet :
30.11.88

(51) Int. Cl.⁴ : **G 01 F   1/66, G 10 K 11/24**

(21) Numéro de dépôt : **86400456.9**

(22) Date de dépôt : **05.03.86**

(54) **Capteur pour ondes ultrasonores destiné à venir en contact avec une paroi à haute température et application de ce capteur.**

(30) Priorité : **15.03.85 FR 8503871**

(43) Date de publication de la demande :
**22.10.86 Bulletin 86/43**

(45) Mention de la délivrance du brevet :
**30.11.88 Bulletin 88/48**

(84) Etats contractants désignés :
**BE CH DE GB IT LI SE**

(56) Documents cités :
**DE-U- 6 944 431**
**GB-A- 2 060 884**
**GB-A- 2 086 183**
**US-A- 3 575 050**
**US-A- 4 392 380**
**IBM TECHNICAL DISCLOSURE BULLETIN, volume 15, no. 1, juin 1972, pages 309-311, ARMONK, N.Y. (US). E.A. ASH et al.: "Leaky wave couplers for guided elastic wave and guided optical wave devices"**

(73) Titulaire : **FRAMATOME**
**Tour Fiat 1 place de la Coupole**
**F-92400 Courbevoie (FR)**

(72) Inventeur : **Malmasson, Jacques**
**16 rue Auguste Renoir**
**F-91000 Evry (FR)**
Inventeur : **Mollot, Christian**
**209 rue du Fg. Saint-Martin**
**F-75010 Paris (FR)**

(74) Mandataire : **Polus, Camille et ai**
**c/o Cabinet Lavoix 2, Place d'Estienne d'Orves**
**F-75441 Paris Cedex 09 (FR)**

# 0 198 731

## Description

L'invention concerne un capteur pour ondes ultrasonores destiné à venir en contact avec une paroi à haute température et les applications de ce capteur, en particulier à des mesures de débit. Un tel capteur est connu du document GB-A-2 086 183.

Dans les installations industrielles dans lesquelles des fluides à haute température circulent dans des canalisations, il est très souvent nécessaire de mesurer la vitesse ou le débit de ces fluides, pour assurer la conduite ou la surveillance de l'installation industrielle. Par exemple, dans le cas des centrales nucléaires comportant un réacteur à eau sous pression, il est nécessaire de connaître le débit d'eau primaire, avec une très bonne précision, pendant le fonctionnement du réacteur. La mesure de débit peut se faire par détermination de la vitesse de propagation de l'eau sous pression dans une canalisation primaire, par mesure du temps de propagation d'ultrasons dans le fluide circulant dans la canalisation. On utilise pour cela des capteurs d'ondes ultrasonores permettant d'émettre des ondes dans l'eau en circulation et de récupérer ces ondes après propagation et éventuellement réflexion sur une paroi de la canalisation. Les capteurs connus nécessitent en fait d'être placés dans une ouverture usinée à l'intérieur de la paroi de la canalisation, pour limiter les pertes et amplifier l'amplitude de l'écho reçu en retour.

Un tel montage du capteur qui est dit intrusif par rapport à la canalisation rend très difficile l'utilisation de ces capteurs sur le circuit primaire d'un réacteur nucléaire à eau sous pression dans lequel l'eau est à une pression de l'ordre de $155 \times 10^5$ Pa et à une température comprise entre 280 et 320 °C. Il faut en effet, pour des questions de sécurité, limiter au maximum le nombre de piquages sur les canalisations primaires du réacteur.

D'autre part, les capteurs qui comportent une pastille en céramique piézoélectrique et un guide d'ondes accolé à cette pastille utilisent pour leur fabrication, des matériaux qui ne sont généralement pas susceptibles de supporter les très hautes températures du fluide et de la canalisation primaire.

Dans le cas d'un montage non intrusif du capteur, celui-ci doit être néanmoins en contact, par l'intermédiaire de son guide d'ondes, avec la paroi de la canalisation qui est à une température très élevée. En conséquence, le guide d'ondes doit être conçu de façon à résister à la température sans se déformer et sans se dilater de façon excessive et de telle sorte qu'il présente une structure homogène, résonnante et facilement usinable pour que sa surface venant en contact avec la paroi de la canalisation ait un état de surface de très bonne qualité, c'est-à-dire une très faible rugosité.

On ne connaissait pas jusqu'ici de guide d'ondes présentant toutes ces caractéristiques.

Le but de l'invention est donc de proposer un capteur pour ondes ultrasonores destiné à venir en contact avec une paroi à haute température, comportant à l'intérieur d'un corps en un matériau métallique relié à un support pour la mise en place du capteur sur la paroi, une pastille en céramique piézoélectrique connectée à des conducteurs électriques d'alimentation ou de mesure et mise en contact avec une extrémité d'un guide d'ondes dont l'autre extrémité est en contact avec la paroi, lorsque le capteur est en position de service, capteur qui ne présente pas les inconvénients des dispositifs selon l'art antérieur.

Dans ce but, le guide d'ondes est constitué par une pièce en une matière vitrocéramique dont l'extrémité en contact avec la paroi est usinée pour présenter un très bon état de surface.

Pour bien faire comprendre l'invention, on va maintenant décrire, à titre d'exemple non limitatif, en se référant aux figures jointes en annexe, un capteur pour ondes ultrasonores suivant l'invention et son application à la mesure du débit de l'eau sous pression dans une canalisation primaire d'un réacteur nucléaire à eau sous pression.

Dans ces figures :

- la Fig. 1 est une vue en coupe du capteur en position de service sur une canalisation primaire d'un réacteur nucléaire à eau sous pression.

- la Fig. 2 est une vue suivant AA de la Fig. 3, à échelle réduite, du capteur en position de service.

- la Fig. 3 est une vue en perspective d'un ensemble de deux capteurs selon l'invention placés sur une canalisation du circuit primaire d'un réacteur nucléaire à eau sous pression, pour la mesure du débit de l'eau sous pression dans cette canalisation.

- la Fig. 4 est une vue schématique montrant la direction de propagation des ondes ultrasonores dans une canalisation primaire d'un réacteur nucléaire à eau sous pression.

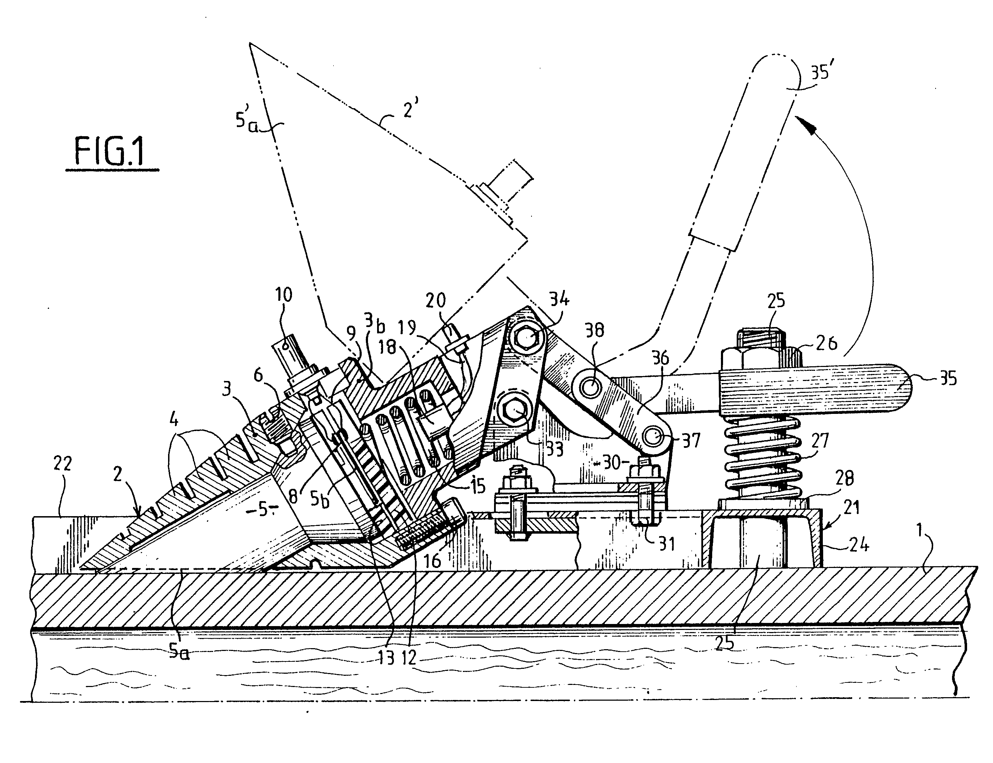

Sur la Fig. 1, on voit une canalisation primaire 1 d'un réacteur nucléaire à eau sous pression sur la paroi externe de laquelle on a fixé un capteur pour ondes ultrasonores désigné de façon générale par le repère 2. Le capteur ultrasonore 2 a été représenté en traits pleins dans sa position de service et en traits mixtes dans sa position hors service 2' dans laquelle la face inférieure du capteur est accessible.

Le capteur 2 comporte un corps 3 métallique dont la partie antérieure est usinée pour constituer des ailettes de refroidissement 4. A l'intérieur de cette partie du corps métallique 3 est disposé le guide d'ondes 5 venant en contact par sa surface 5a avec la surface extérieure de la canalisation 1 remplie d'eau à une température voisine de 300 °C. Le guide d'ondes 5 est fixé dans le corps 3 par une vis 6. La surface d'extrémité 5b du guide d'ondes 5 opposée à la surface 5a est en contact avec une pastille 8 en céramique piézoélectrique qui peut être reliée par l'intermédiaire de conducteurs électriques 9 et d'une borne de raccordement rapide 10 à une source d'alimentation en courant électrique et/ou à une installation de récupération et de traitement des signaux émis par la cellule piézoélectrique 8.

2

Cette cellule 8 est maintenue en contact avec la face 5b du guide d'ondes 5 usinée à l'extrémité d'une portée cylindrique à diamètre réduit de ce guide d'ondes, par une butée 12 et une rondelle de centrage 13 en un matériau vendu sous l'appellation commerciale PERMAGLASS. La rondelle de centrage 13 a une épaisseur supérieure à l'épaisseur de la portée cylindrique sur laquelle est usinée la surface d'appui 5b de la pastille 8 et très légèrement inférieure à la somme des épaisseurs de cette partie cylindrique du guide d'ondes et de la pastille 8. La butée 12 est mise en appui sur la pastille 8 par un ressort 15 maintenu à l'intérieur de la partie postérieure 3b du corps métallique 3 du capteur fixé sur la partie antérieure de ce corps par l'intermédiaire de vis telles que 16. La pastille 8 est ainsi maintenue fermement en appui contre la surface 5b du guide d'ondes 5.

Une cellule à effet Peltier 18 est disposée dans la partie 3b du corps métallique 3, cette capsule étant alimentée en courant électrique par l'intermédiaire de fils 19 et d'une borne de connection rapide 20. Cette capsule à effet Peltier permet de limiter la température à l'intérieur du corps métallique 3, lorsque le capteur est mis en service, comme représenté sur la Fig. 1, sur une paroi à haute température.

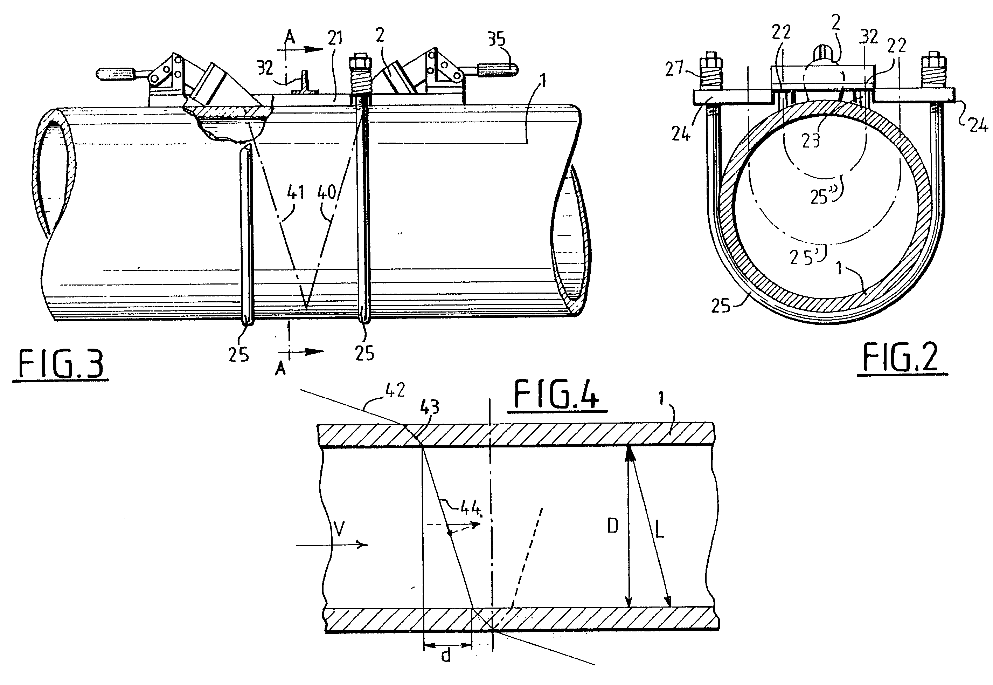

L'extrémité de la partie postérieure 3b du corps métallique comporte deux trous permettant de relier le corps métallique 3, de façon articulée, à un support désigné de façon générale par le repère 21. Ce support 21 sera décrit en se référant aux Fig. 1 et 2.

Le support 21 comporte deux profilés 22 venant en appui sur la surface extérieure de la canalisation 1, au voisinage de sa partie supérieure, par des pièces d'appui 23. Des profilés 24 ayant une section en forme de U sont fixés perpendiculairement aux profilés 22 à l'une de leurs extrémités. Les profilés 24 sont percés d'ouvertures permettant le passage des extrémités d'un collier de fixation 25 dont les extrémités sont filetées pour recevoir un écrou de serrage 26 assurant la fixation des extrémités du collier 25 sur les profilés 24 par l'intermédiaire d'un ressort 27 et d'une rondelle 28. Sur les deux profilés parallèles 22 disposés suivant la direction longitudinale de la canalisation 1, est fixé un support 30 par l'intermédiaire de vis 31 visibles sur la Fig. 1. Le support 30 comporte des trous permettant la fixation articulée du corps 3 du capteur. Ce corps 3 est articulé sur le support par l'intermédiaire d'une articulation 33 à axe horizontal et sur l'extrémité d'un levier de manoeuvre 35 par l'intermédiaire d'une articulation 34 également à axe horizontal. Le levier 35 est lui-même articulé sur le support 30 par l'intermédiaire d'une biellette 36. La biellette 36 est articulée sur le support 30 par l'intermédiaire d'une articulation 37 et sur la poignée 35 par l'intermédiaire d'une articulation 38, toutes les articulations étant à axes parallèles. Ce montage permet de mettre le capteur 2 dans sa position hors service 2' en remontant la poignée du levier 35 de sa position représentée en traits pleins sur la Fig. 1 à sa position 35' représentée en traits mixtes. On peut ainsi accéder facilement à la face inférieure du capteur qui vient en position de service en contact avec la canalisation 1.

Sur la Fig. 2, on a représenté les positions 25' et 25" d'un collier de fixation dans le cas de canalisations de diamètres décroissants.

Le guide d'ondes 5 assurant le couplage entre la pastille en céramique piézoélectrique 8 et la canalisation 1 doit assurer un parfait couplage, en particulier lorsqu'il s'agit d'effectuer des mesures dans le milieu liquide remplissant la canalisation. Ce guide d'ondes doit donc être en un matériau ayant une structure homogène et résonnante et doit pouvoir être usiné facilement de façon que sa surface d'appui 5a sur la paroi dans laquelle on effectue la mesure ait un parfait état de surface. Cet état de surface à très faible rugosité obtenu par polissage doit être analogue au poli miroir.

De plus, le guide d'ondes doit supporter les hautes températures transmises par la paroi de la canalisation sans déformation ni dilatation excessive.

Aucun des matériaux connus pour la fabrication des guides d'ondes ne répond à ces exigences.

On a réalisé le guide d'ondes 5 en une matière vitrocéramique vendue sous la dénomination commerciale MACOR par la Société Corning Glass. Ce matériau a approximativement la composition suivante :

| | |
|---|---|
| Silice $SiO_2$: | 46 % |
| Alumine $Al_2O_3$: | 16 % |
| Magnésie $MgO$ : | 17 % |
| Oxyde de Potassium $K_2O$ : | 10 % |
| Oxyde de Bore $B_2O_3$: | 7 % |
| Fluor : | 4 % |

De telles matières vitrocéramiques ont donc une composition proche de celle du verre et on peut réaliser leur élaboration et leur mise en forme par des techniques verrières.

Cependant, après mise en forme de la pièce, on fait subir à celle-ci des traitements thermiques permettant un développement limité de cristaux à l'intérieur de la masse, vitreuse. Ce développement de cristaux est favorisé par des agents de nucléation introduits dans le matériau fondu.

De telles matières vitrocéramiques dont la composition peut être très variable sont bien connues, mais on n'a jamais songé à les utiliser pour la réalisation de guides d'ondes réalisant le couplage entre une pastille piézoélectrique et une paroi à haute température.

Le guide d'ondes 5 a été réalisé par coulée puis traitement thermique de cristallisation d'une pièce ayant la composition indiquée, puis usinage de finition de cette pièce, en particulier pour réaliser les surfaces d'appui 5a et 5b avec un très bon état de surface.

Cet usinage du guide d'ondes, dans le cas de canalisations de petits diamètres, comprend un usinage par meulage de la surface d'appui 5a du guide d'ondes de façon à rendre cette surface d'appui cylindrique. Dans le cas de canalisations de grands diamètres, l'appui se fait suivant une génératrice de la canalisation, la surface d'appui 5a étant plane.

Les guides d'ondes en matière vitrocéramique présentent toutes les caractéristiques voulues pour la transmission d'ondes ultrasonores à travers une paroi à haute température mais cependant, le matériau, à cause de son homogénéité et de sa compacité, présente un coefficient de transmission thermique relativement important. C'est la raison pour laquelle on dispose dans le corps métallique 2 une capsule à effet Peltier 18 qui est alimentée de façon à provoquer un effet endothermique limitant la température à l'intérieur du corps du capteur.

C'est ainsi qu'en utilisant une capsule à effet Peltier, on peut limiter la température au voisinage de 40 °C dans le corps du capteur avec une température de l'ordre de 120 °C à l'interface 5b entre le guide d'ondes 5 et la pastille piézoélectrique 8, dans le cas d'une paroi 1 à une température de l'ordre de 320 °C qui est la température maximale du fluide primaire d'un réacteur nucléaire à eau sous pression.

Il est à remarquer que le corps métallique 2 ne vient pas en contact direct avec la paroi 1, ce contact étant assuré uniquement par l'extrémité du guide d'ondes 5. Le couplage entre le guide d'ondes et la canalisation 1 peut être amélioré en utilisant un matériau de couplage visqueux, par exemple du type constitué par un agent organique chargé de particules de nickel. Un tel matériau de couplage visqueux se trouve dans le commerce sous la dénomination NEVER SEEZ.

En se reportant aux Fig. 3 et 4, on va maintenant décrire une application du capteur suivant l'invention, à la mesure de débit dans une canalisation primaire d'un réacteur nucléaire à eau sous pression.

On utilisera des repères identiques pour désigner les éléments correspondants représentés aux Fig. 1 et 2 d'une part et 3 d'autre part. En effet, pour réaliser la mesure de débit dans une canalisation primaire 1 d'un réacteur nucléaire à eau sous pression, on utilise deux capteurs 2 identiques, du type décrit en se référant aux Fig. 1 et 2. Ces deux capteurs sont disposés l'un en face de l'autre avec un espacement d sur la canalisation 1. Les supports 21 de ces capteurs assemblés par des entretoises telles que 32 sont maintenus par des colliers de serrage 25 sur la canalisation 1. Les capteurs 2 sont montés pivotants comme décrit précédemment, sur les supports 21 de façon qu'ils puissent être mis soit en position de service 2 soit en position inactive 2' par basculement de la poignée 35.

L'un des capteurs 2 émet une onde ultrasonore qui se propage dans l'eau sous pression en circulation dans la canalisation, suivant la direction 40, puis est réfléchie par la paroi intérieure de la canalisation pour revenir suivant la direction 41 vers le second capteur 2. Les ondes effectuent également le parcours inverse, les capteurs 2 étant à la fois émetteurs et récepteurs. La distance d est déterminée de façon à obtenir un écho suffisant malgré les pertes lors du cheminement des ondes dans la canalisation, pour pouvoir effectuer une mesure de temps de propagation des ondes entre les deux capteurs dans un sens et dans l'autre.

Une telle mesure permet de déterminer la vitesse de l'eau sous pression et donc son débit dans la canalisation 1, cette méthode de mesure de débit par ondes ultrasonores étant bien connue.

Nous allons en rappeler le principe en nous référant à la Fig. 4.

Les ondes ultrasonores sont émises suivant la direction 42, traversent la paroi de la canalisation 1 suivant la direction 43 et l'eau sous pression circulant dans cette canalisation 1 suivant la direction 44 et suivant le parcours xy. La direction 44 fait un angle $\theta$ avec l'axe longitudinal de la canalisation 1 correspondant à la direction du vecteur vitesse $\overline{V}$ de l'eau circulant dans la canalisation. L est la longueur du parcours xy qui est supérieure au diamètre intérieur D de la canalisation 1. d est la distance suivant la direction axiale de la canalisation entre les points x et y.

On peut facilement montrer par un calcul des temps de propagation Txy des ondes entre x et y et Tyx de ces ondes entre y et x, que la vitesse V du fluide dans la canalisation peut être exprimée uniquement en fonction de Txy et Tyx.

Ce calcul bien connu des spécialistes des mesures de vitesse et de débit de fluide par ultrasons montre, que :

$$v = 2\,L^2/d\,\frac{Txy - Tyx}{(Txy + Tyx)^2}$$

La position des capteurs d'ondes ultrasonores étant déterminée, l'expression $2L^2/d$ est une constante.

V est donc de la forme d'une constante que multiplie une fonction des temps de propagation des ondes ultrasonores entre x et y dans un sens et dans l'autre.

On peut donc déduire très facilement de la mesure de ces temps de propagation, la valeur de la vitesse du fluide dans la canalisation et de son débit.

Cette détermination de la vitesse et celle du débit peuvent facilement être automatisées en fournissant comme données d'entrée à un calculateur les temps de propagation des ondes dans un sens et dans l'autre, sous forme numérique.

Le montage des capteurs représentés à la Fig. 3 permet une détermination de la vitesse V du fluide dans la canalisation 1 de la même façon mais avec un parcours des ondes de longueur double, ce qui permet d'accroître la précision de la mesure.

De plus, les deux capteurs 2 sont disposés sur une même génératrice de la canalisation 1. Cette mise en place des capteurs est plus facile à réaliser qu'une mise en place sur des génératrices diamétralement opposées.

L'angle d'incidence du faisceau d'ondes ultrasonores dans l'eau sous pression de la canalisation est de l'ordre de 17° pour une incidence initiale du faisceau 42 de 70°. Ces valeurs des angles d'incidence permettent de réaliser les mesures dans de très bonnes conditions.

L'utilisation d'un guide d'ondes en matière vitrocéramique dans les capteurs d'ondes ultrasonores permet de réaliser un très bon couplage entre la pastille piézoélectrique et la paroi de la canalisation tout en évitant des déformations ou des dilatations du guide d'ondes en contact avec la paroi à haute température de la canalisation, préjudiciables à l'obtention de mesures reproductibles.

D'autre part, la disposition du capteur sur son support par l'intermédiaire d'un moyen articulé tel que celui qui a été décrit permet de faire pivoter ce capteur et d'accéder à sa face inférieure sans avoir à démonter le bridage de ce support sur la canalisation. Le capteur peut ainsi être remis en place de façon extrêmement précise sur la paroi extérieure de la canalisation.

L'invention ne se limite pas au mode de réalisation qui a été décrit ; elle en comporte au contraire d'autres variantes.

C'est ainsi que le guide d'ondes peut avoir une forme différente de celle qui a été décrite et qu'il peut être monté d'une façon différente à l'intérieur du corps métallique du capteur. L'extrémité de ce guide d'ondes doit cependant toujours être légèrement saillante par rapport au corps métallique, pour venir seule en contact avec la paroi à haute température.

Le mode de fixation de la pastille piézoélectrique et sa mise en contact avec une des extrémités du guide d'ondes peuvent être différents de ceux qui ont été décrits. On peut également envisager un moyen de refroidissement de l'intérieur du capteur différent d'une capsule à effet Peltier.

Le capteur peut être relié de façon articulée au support d'une façon différente de celle qui a été décrite et ce capteur peut être dans certains cas fixé de façon rigide sur ce support, s'il n'est pas nécessaire de contrôler sa partie venant en contact avec la paroi à haute température.

Le guide d'ondes peut être réalisé en une matière vitrocéramique différente de celle qui a été indiquée ; cette matière vitrocéramique sera choisie en fonction de l'application à laquelle est destiné le capteur et en particulier en fonction de la température de la paroi sur laquelle vient s'appliquer le guide d'ondes.

Les applications d'un capteur dont le guide d'ondes est en un matériau vitrocéramique tel que celui qui a été décrit ne se limitent pas à la mesure de débit dans une canalisation d'un circuit primaire de réacteur nucléaire à eau sous pression. Un tel capteur pourrait être utilisé pour d'autres mesures ou contrôles non destructifs à travers une paroi à une température bien supérieure à la température primaire d'un réacteur à eau sous pression. En effet, le matériau vitrocéramique tel que décrit présente des caractéristiques proches de celles des réfractaires et peut résister à des températures très élevées de l'ordre de 1 500 °C.

Les guides d'ondes en matière vitrocéramique pourront toujours être obtenus avec un très bon état de surface, que cet état de surface soit obtenu directement sur la pièce coulée ou par polissage.

Le capteur suivant l'invention s'applique à toute mesure ou à tout contrôle non destructif, par ultrasons, avec propagation des ondes ultrasonores à travers une paroi à haute température.

**Revendications**

1. Capteur pour ondes ultrasonores destiné à venir en contact avec une paroi (1) à haute température comportant, à l'intérieur d'un corps (3) en un matériau métallique relié à un support (21) pour la mise en place du capteur (2) sur la paroi (1), une pastille (8) en céramique piézoélectrique connectée à des conducteurs électriques (9) d'alimentation et/ou de mesure et mise en contact avec une extrémité (5b) d'un guide d'ondes dont l'autre extrémité (5a) est en contact avec la paroi (1), lorsque le capteur (2) est en position de service, caractérisé par le fait que le guide d'ondes (5) est constitué par une pièce en un matériau vitrocéramique dont l'extrémité (5a) en contact avec la paroi (1) est usinée pour présenter un très bon état de surface.

2. Capteur suivant la revendication 1, caractérisé par le fait que la matière vitrocéramique a approximativement la composition suivante :

| | |
|---|---|
| Silice $SiO_2$ : | 46 % |
| Alumine $Al_2O_3$ : | 16 % |
| Magnésie $MgO$ : | 17 % |
| Oxyde de Potassium $K_2O$ : | 10 % |
| Oxyde de Bore $B_2O_3$ : | 7 % |
| Fluor : | 4 %. |

3. Capteur suivant l'une quelconque des revendications 1 et 2, caractérisé par le fait que le couplage entre la surface d'extrémité (5a) du guide d'ondes et la paroi (1) est réalisé par l'intermédiaire d'une matière de couplage constituée par un matériau organique renfermant de la poudre de nickel.

4. Capteur suivant l'une quelconque des revendications 1 à 3, caractérisé par le fait que le corps métallique (3) du capteur est articulé sur un support (30) fixé rigidement par rapport à la paroi (1) et sur l'extrémité d'un levier (35) lui-même articulé sur le support (30) pour le déplacement du capteur, par actionnement du levier, entre une position de service où le guide d'ondes (5) est en contact avec la paroi (1) et une position hors service où l'extrémité de contact (5a) du guide d'ondes est accessible.

5. Capteur suivant la revendication 4, caractérisé par le fait que le levier (35) est articulé sur le support (30) par l'intermédiaire d'une biellette (36).

6. Capteur suivant l'une quelconque des revendications 4 et 5, caractérisé par le fait que la paroi (1) est constituée par la paroi externe d'une canalisation, et que le support (30) est fixé sur la canalisation (1) par l'intermédiaire d'au moins un collier (25) enserrant la canalisation.

7. Application d'un capteur pour ondes ultrasonores suivant l'une quelconque des revendications 1 à 6 à la mesure de débit de l'eau sous pression dans une canalisation primaire d'un réacteur nucléaire à eau sous pression.

8. Application suivant la revendication 7, caractérisée par le fait que deux capteurs pour ondes ultrasonores identiques sont disposés sur une même génératrice de la canalisation (1), avec un espacement d.

**Claims**

1. Ultrasonic wave sensor intended to come into contact with a wall at a high temperature (1), incorporating, within a body (3) made of a metallic material connected to a support (21) for positioning the sensor (2) on the wall (1), a piezoelectric ceramic pellet (8) connected to electrical power supply and/or measuring leads (9) and making contact with one end (5b) of a waveguide the other end (5a) of which is in contact with the wall (1) when the sensor (2) is in the operating position, characterised in that the waveguide (5) consists of a single part made of a vitroceramic material, whose end (5a) in contact with the wall (1) is machined to have a very high surface finish.

2. Sensor according to claim 1, characterised in that the vitroceramic material has approximately the following composition :

| | |
|---|---|
| Silica SiO$_2$ : | 46 % |
| Alumina Al$_2$O$_3$ : | 16 % |
| Magnesia MgO : | 17 % |
| Potassium oxide K$_2$O : | 10 % |
| Boron oxide B$_2$O$_3$ : | 7 % |
| Fluorine : | 4 % |

3. Sensor according to claim 1 or 2, characterised in that the coupling between the end surface (5a) of the waveguide and the wall (1) is made by means of a coupling material, which consists of an organic material containing nickel powder.

4. Sensor according to any one of claims 1 to 3, characterised in that the metal body (3) of the sensor is articulated on a support (30) fixed rigidly with respect to the wall (1) and on the end of a lever (35), which is itself articulated on the support (30) for moving the sensor, by operating the lever, between an operating position in which the waveguide (5) is in contact with the wall (1) and a non-operating position in which the contact end (5a) of the waveguide is accessible.

5. Sensor according to claim 4, characterised in that the lever (35) is articulated on the support (30) by means of a link (36).

6. Sensor according to one of claims 4 and 5, characterised in that the wall (1) consists of the outer wall of a duct and the support (30) is fixed on the duct (1) by means of at least one strap (25) clamped round the duct.

7. Application of an ultrasonic wave sensor according to any one of claims 1 to 6 to the measurement of the flow rate of pressurized water in a primary duct of a pressurized-water nuclear reactor.

8. Application according to claim 7, characterised in that two identical ultrasonic wave sensors are arranged on the same generatrix of the duct (1), at a spacing d.

**Patentansprüche**

1. Ultraschallwandler zum Kontaktieren mit einer Wand (1) auf hoher Temperatur, der im inneren eines Körpers (3) aus Metall, der mit einem Träger (21) zum plazieren des Wandlers (2) auf der Wand (1) verbunden ist, aufweist : ein Plättchen (8) aus piezoelektrischer Keramik, das an elektrische Speise- und/oder Meßleitungen (9) angeschlossen ist und mit einem Ende (5b) mit einem Wellenleiter in Berührung steht, dessen anderes Ende (5a) in Berührung mit der Wand (1) steht, während der Wandler (2) sich in Betriebsstellung befindet, dadurch gekennzeichnet, daß der Wellenleiter (5) einstückig aus einem Teil aus vitrokeramischem Material besteht, dessen mit der Wand (1) in Kontakt stehendes Ende (5a) spanend bearbeitet ist, um einen sehr guten Oberflächenzustand aufzuweisen.

2. Wandler nach Anspruch 1, dadurch gekennzeichnet, daß das vitrokeramische Material ungefähr die folgende Zusammensetzung hat :

| | |
|---|---|
| Silicium-Dioxid $SiO_2$ : | 46 % |
| Aluminiumoxid $Al_2O_3$ : | 16 % |
| Magnesiumoxid MgO : | 17 % |
| Kaliumoxid $K_2O$ : | 10 % |
| Boroxid $B_2O_3$ : | 7 % |
| Fluor : | 4 %. |

3. Wandler nach einem der Ansprüche 1 oder 2, dadurch gekennzeichnet, daß die Kopplung zwischen der Oberfläche des Endes (5a) des Wellenleiters und der Wand (1) über ein Kopplungsmaterial erfolgt, das aus einem organischen Material besteht, das Nickelpulver einschließt.

4. Wandler nach einem der Ansprüche 1 bis 3, dadurch gekennzeichnet, daß der Metallkörper (3) des Wandlers auf einen Träger (30) angelenkt ist, der starr bezüglich der Wand (1) befestigt ist und am Ende eines Hebels (35) angelenkt ist, der wiederum am Träger (30) angelenkt ist, um den Wandler durch Betätigung des Hebels zwischen einer Betriebsstellung, in der der Wellenleiter (5) in Kontakt mit der Wand (7) und einer Außerbetriebsstellung, in der das Kontaktende (5a) des Wellenleiters freiliegt, zu bewegen.

5. Wandler nach Anspruch 4, dadurch gekennzeichnet, daß der Hebel (35) an dem Träger (30) über einen Schwingarm (36) angelenkt ist.

6. Wandler nach einem der Ansprüche 4 und 5, dadurch gekennzeichnet, daß die Wand (1) die Außenwandung eines Leitungssystems bildet und dadurch, daß der Träger (30) auf dem Leitungssystem (1) über mindestens eine Rohrschelle (25) befestigt ist, die die Leitung umschließt.

7. Anwendung eines Ultraschallwandlers nach einem der Ansprüche 1 bis 6, zur Messung des Druckwasserdurchsatzes in dem Primärleitungssystem eines Druckwasserkernreaktors.

8. Anwendung nach Anspruch 7, dadurch gekennzeichnet, daß zwei identische Ultraschallwandler auf ein und derselben Erzeugenden des Leitungssystems (1) mit einem Abstand d zueinander angeordnet sind.

FIG.1

0 198 731

A

21  2  35

32

41  40

1

25  25

A

**FIG.3**

22  2  32  22

27

24  24

23

25″

25‴

25⁗  1

25

**FIG.2**

0 198 731

42  43  **FIG.4**  1

44

V

D  L

d

2